(19) **Europäisches Patentamt**
**European Patent Office**
**Office européen des brevets**

(11) **EP 1 610 432 B1**

(12) **EUROPEAN PATENT SPECIFICATION**

(45) Date of publication and mention
of the grant of the patent:
**21.08.2013 Bulletin 2013/34**

(51) Int Cl.:
***H02H 9/02*** *(2006.01)* ***H01H 9/54*** *(2006.01)*

(21) Application number: **05012971.7**

(22) Date of filing: **16.06.2005**

(54) **Control circuit**

Steurschaltung

Circuit de commande

(84) Designated Contracting States:
**AT BE BG CH CY CZ DE DK EE ES FI FR GB GR HU IE IS IT LI LT LU MC NL PL PT RO SE SI SK TR**

(30) Priority: **21.06.2004 SE 0401638**

(43) Date of publication of application:
**28.12.2005 Bulletin 2005/52**

(73) Proprietor: **ABB Research Ltd.**
**8050 Zürich (CH)**

(72) Inventor: **Jonsson, Tomas**
**723 55 Västeras (SE)**

(74) Representative: **Ahrengart, Kenneth et al**
**ABB AB**
**Intellectual Property**
**Ingenjör Bååths Gata 11**
**721 83 Västerås (SE)**

(56) References cited:
**US-A- 4 583 146 US-A- 5 805 393**
**US-A- 6 028 471**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention concerns a device and a method for controlling the power flow in an electric transmission line. More precisely the invention concerns a method and an apparatus for protection of a control circuit of a transmission line. The circuit comprises at least one unit containing a inductor and a semiconducting element. A semiconducting element in this context should be broadly understood to include all devices that has semiconducting properties and thus comprising diodes as well as semiconducting switching element such as a thyristor or an IGBT. An inductor in this context should be understood to comprise one or a plurality of units that comprises inductive properties. An inductor thus also includes a combination of elements, some of them having semiconducting properties, which form a unit that exhibit inductive properties.

BACKGROUND OF THE INVENTION

Circuit for controlling the power flow of an electric power transmission system often involves semiconducting elements. In many cases these circuits also includes inductor elements. Such elements must be protected against a sudden rush of current as a result of a fault condition in the transmission line. At a fault condition the current increases in a matter of milliseconds to very high levels. Normally a fault condition is stopped by a circuit breaker that opens the circuit in a matter of 50-150 ms.

A circuit comprising an inductor and a semiconducting element connected in parallel with each other is used to control the power flow in a transmission line. The elements of such a circuit are normally protected from overvoltages by a surge arrester connected in parallel with the circuit. The elements are also protected from an abnormal current flow by a closing switch that form a bypass of one or a plurality of circuits. This closing switch has a much more rapid action than the circuit breaker. After the fault current has decayed or the circuit breaker has opened the main circuit the closing switch will go back to a normal open position.

In order to protect the inductor, the semiconducting element and the surge arrester the closing switch must be closed to form a bypass before the first current peak occur. This demands the closing switch to have an operation time of less than a quarter of a harmonic period of the fundamental frequency. Consequently the control circuit will be bypassed before the current has reached a zero crossing.

As soon as a current is fed to an inductor, magnetic energy will be built up in the inductor. In an ac circuit the magnetic energy will alter according to the alteration of the current and thus no magnetic energy will be stored in the inductor when the current passes zero. When the feeding current is redirected by for instance a bypass connection the stored magnetic energy will cause a current in the bypassed circuit. This would be a dc current that will flow until it has been decayed by the effect of the resistance in the circuit. When thus the resistance in such a circuit is low the current will flow for a considerable period of time.

When a circuit comprising an inductor is exposed to a sudden rush of current as a result of a fault condition a dc current could thus be "trapped" in the circuit. Since this current will continue to flow the inductor itself or other elements in the circuit, such as semiconducting elements, may be harmed. The trapped current will also prevent the closing switch of the bypass to open until the current has been reduced to zero. During this time the control of the bypass is prevented.

In D1, US 6 028 471 A (KOYAMA KENICHI [JP] et al, 22 February 2000), against which the preamble is based on, discloses a device comprising a semiconducting switching element and a surge arrester for protecting from overvoltage, and a second bypass path, in parallel to switching element and the arrester, comprising a switch.

SUMMARY OF THE INVENTION

A primary object of the present invention is to provide a protecting device for a control circuit by which the harmful effect of a trapped current is reduced. A secondary object of the invention is to protect elements in a control circuit containing an inductor in an electric power transmission system.

This object is achieved according to the invention according to the features in the characterizing part of the independent claim 1 and according to a method as claimed in the independent claim 6. Preferred embodiments are described in the dependent claims.

In a circuit comprising an inductor and a semiconducting element connected in parallel and which is exposed to a sudden rush of current the first action taken is to have the current bypassing the circuit. Thus a closing switch is introduced in parallel to the circuit. The shorter the action time of the closing switch, the better the protection of the elements in the circuit. The aim is to provide a bypass within a quarter of a harmonic period of the fundamental frequency.

Even though the bypass is achieved within a quarter of a period there might be situations when the current increases rapidly within that quarter of a period. If the current rapidly increases in the inductor to several times the normal current and then suddenly is interrupted by the introduction of a bypass, there will be a built up magnetic energy trapped in the inductor. Thus as the fault current, which is an ac current, is bypassing the circuit, there is a dc current resulting from the magnetic energy In the inductor that will still be floating in the control circuit. This dc current will harm the inductor or the semiconducting elements in the circuit.

According to the invention the trapped energy in a control circuit is stopped by introducing an energy absorbing arrangement in the control circuit. In an electric circuit that would be a resistive element, which would absorb electric energy by heat transformation.

According to a first embodiment of the invention the arrangement comprises a resistor connected in series of the closing switch. At a fault condition when the closing switch is closed this would result in that the resistor must carry both the fault ac current and the trapped dc current. The resistor therefore must withstand very high currents.

The choice of the value of the resistor in the bypass path is delicate. When a higher value is used, a larger part of the externally fed fault current will flow through the bypassed circuit. By choosing a too high a value there is a potential risk of still harming the components in the control circuit.

In a further embodiment of the invention the arrangement comprises a filter arrangement. The filter is composed such that the ac current is passing without resistance but the dc current would have to pass a resistor connected in parallel to the filter.

In a first arrangement of this embodiment the filter is connected in series with the closing switch and thus in parallel to the control circuit. In a second arrangement of the embodiment the filter is connected in series with control circuit and thus in parallel to the closing switch.

In a second aspect of the invention the objects are achieved by a method for introducing energy absorption in a control circuit.

BRIEF DESCRIPTION OF THE DRAWINGS

Other features and advantages of the present invention will become more apparent to a person skilled in the art from the following detailed description in conjunction with the appended drawings in which:

FIG 1 is an electric circuit according to the present invention,
FIG 2 is an electric circuit according to an embodiment of the invention,
FIG 3 is an electric circuit according to a further embodiment of the invention,
FIG 4 is an electric circuit according to a further embodiment of the invention comprising two control circuit units, and
FIG 5 is an electric circuit according to a further embodiment of the invention in a transformer arrangement.

DETAILED DESCRIPTION OF THE INVENTION

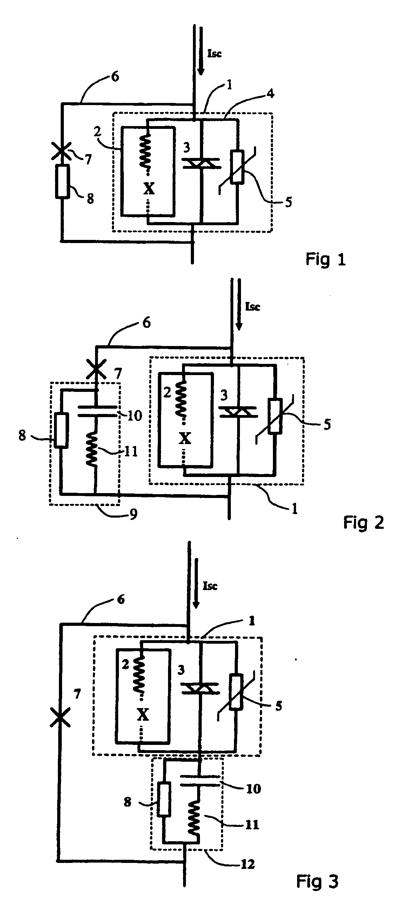

A device including a control circuit 1 for controlling the power flow in a electric power transmission line is shown in fig 1. The control circuit comprises an inductor 2 in parallel connection with a semiconducting element 3. In the embodiment the semiconducting element comprises a bidirectional thyristor or an arrangement of two antiparallel thyristors. By controlling the thyristor the current flowing through the circuit is either passing through the inductor or bypassed by the thyristor. The control circuit further comprises a first bypass path 4 containing a surge arrester 5 for overvoltage protection. The control circuit is protected from overcurrents by a second bypass path 6 comprising a closing switch 7.

In circuits like the one showed in Fig 1, containing inductance and where it is required to bypass the circuit for protection at short circuit current (Isc), a trapped current may occur. When a bypass is created by a device without current interrupting capability, through a closing switch 7 or a thyristor 3, the current will be trapped until a natural current zero is obtained. Since the fault current and the trapped current, which is a dc current, are added, a natural current zero may not occur at once since the trapped current is only slowly decaying.

The magnetic energy stored in the inductor at the instant of bypass will circulate through the bypass path with an exponential decay determined by the circuit losses.

$$I = \hat{I}e^{-\frac{t}{\tau}} \quad \tau = \frac{L}{r}$$

Since the circuit losses in power system devices typically are low, with a quality factor typically in the range 200-500. The time constant of the trapped current decay will be 0.6s - 1.6s.

$$q = \frac{\omega L}{r} \Rightarrow \tau = \frac{q}{\omega}$$

The trapped current will result in two unwanted effects:

1. Stresses of the thyristors (TY), the inductor (L) and the circuit X
2. Lost controllability of device X

According to the invention the solution to this problem is to introduce a resistance in the circuit. The resistance must be connected in such a way that it does not introduce losses in normal operation. The resistor may also comprise such properties that it do not introduce losses in normal operation. In a first embodiment according to fig 1 a series resistor 8 is included in the second bypass 6 containing the closing switch. The resistor will reduce the decay time constant of the trapped current. The series resistor 8 has to be rated for the energy corresponding to the short circuit current (Isc) during the bypass interval.

In a further embodiment of the invention according to fig 2 a series filter 9 is introduced in the second bypass path 6. The series filter comprises a capacitor 10 and a second inductor 11 connected in series and a resistor 8 connected in parallel with the capacitor and the second inductor. The series filter is designed to provide a low or a zero fundamental frequency impedance ($XCf=-XLf$) and sufficient dc resistance in order to reduce the decay time constant of the trapped current. The energy rating of the series resistor in the embodiment to fig 2 is compared to the embodiment according to fig 1 reduced to a value corresponding to the trapped energy in the inductor The other filter components (Cf and Lf) should be rated for the short circuit current (Isc) during the bypass interval.

In yet a further embodiment shown in fig 3 a series filter 12 is introduced In series with the control circuit 1. The series filter 12 comprises a capacitor 10 and a second inductor 11 connected in series and a resistor 8 connected in parallel with the capacitor and the second inductor. The series filter 12 comprises a low fundamental frequency impedance and sufficient dc resistance in order to reduce the decay time constant of the trapped current. With this arrangement the main circuit (X) is effectively bypassed by the closing switch 7 which will carry the short circuit current (Isc). The filter resistor 8 needs only to be rated corresponding to the trapped energy in the first inductor. The other filter components (Cf and Lf) should be rated for the normal load current.

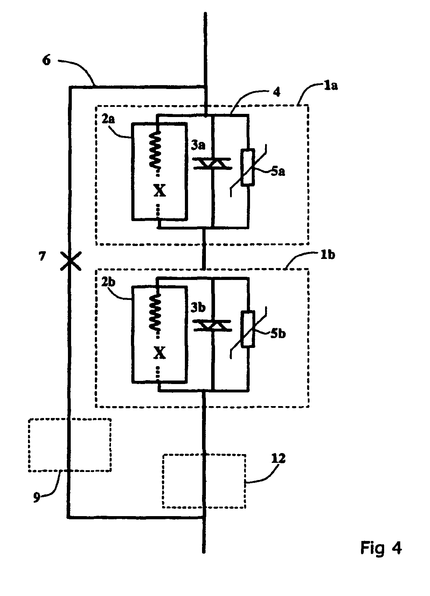

In the embodiment according to fig 4 the control circuit comprises two circuit units 1a, 1b, each comprising an inductor 2, a semiconducting device 3 and a surge arrester 5. The two circuit units is protected by a single bypass 6 that comprises a closing switch 7. According to the invention the control circuit according to fig 4 also comprises a filter that has a resistance for absorbing dc energy but zero impedance to let an ac current pass. As showed in the previous embodiments either the bypass contains a filter 9 or a filter 12 is connected in series with the control circuit units 1.

In this embodiment a special circumstance could occur. This will occur if the first thyristor element 3a is closed and the second thyristor element 3b is open at the time of a fault condition. The closing switch 7 will rapidly form a bypass 6 for the main current flow. The trapped current will form a second path involving the first thyristor 3a the second inductor 2b and the bypass 6. Thus in this situation the trapped current will harm not only the second inductor but also the first thyristor.

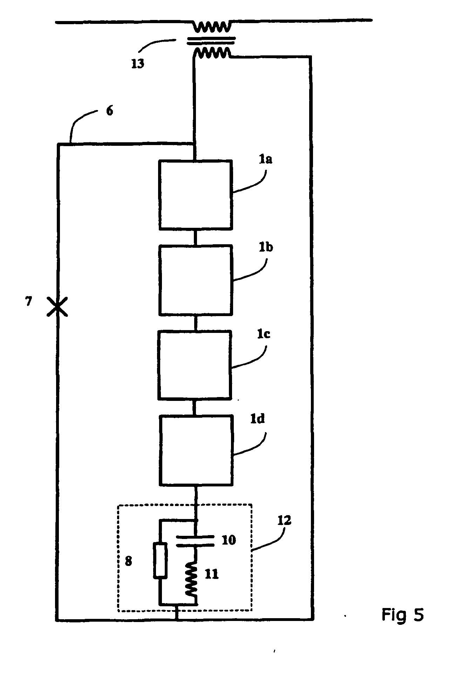

In yet a further embodiment according to fig 5 the control circuit is connected to the power system by means of a transformer 13. In this embodiment the control unit comprises a plurality of circuit units 1a, 1b, 1c, 1d and a filter 12 connected in series. Each of the plurality of control circuit units comprises an inductor, a thyristor and a surge arrester. In the embodiment in fig 5 the control circuit comprises a bypass 6 containing a closing switch 7, which bypasses all of the plurality of circuit units and the filter.

Although advantageous the present invention is not restricted to form the embodiments presented. Within the skills of a person skilled in the art also other embodiments where a resistance is introduced to absorb energy from a trapped current would be comprised in the scope of the invention. Thus a control circuit comprising a plurality of series connected sets of circuit comprising an inductor and protected by a common bypass path containing a closing switch is also part o the invention. Applications for power flow control involving series reactors controlled by a parallel thyristor switch will typically suffer from the trapped current during protective bypass. An important prerequisite for optimized thyristor rating is also the use of a fast bypass switch as the closing switch 7 giving a bypass delay of less than 5ms.

**Claims**

1. Device for controlling a power flow in an electric power transmission system comprising a control circuit (1) and a second bypass path (6) in parallel connection therewith, the control circuit (1) comprising a first inductor (2) and a semiconducting switching element (3) connected in parallel and a first bypass path (4) comprising a surge arrester (5), and the second bypass path (6) comprising a closing switch (7), **characterized in that** the device comprises a resistor (8) for absorbing the dc electric energy trapped in the control circuit by heat transformation.

2. Device according to claim 1, wherein the resistor (8) is comprised in the second bypass path (6).

3. Device according to claim 1, wherein the resistor (8) is connected in series with the control circuit (1)

4. Device according to claim 2 or 3, wherein the device comprises a capacitor (10) and a second inductor (11) connected in parallel with the resistor (8) for forming a filter (9, 12) having a low impedance for the fundamental frequency.

5. Device according to any of preceding claims, wherein the control circuit (1) comprises a plurality of circuit units (1a - 1d).

6. Method for protection of a control circuit (1) from trapped current, the control circuit (1) comprising a first inductor (2), a semiconducting switching element (3) and a first bypass path (4) comprising a surge arrester (5) connected in parallel, and a second bypass path (6) comprising a closing switch (7), **characterized by** providing a resistor (8) for absorbing DC electric energy trapped in the control circuit (1) by heat transformation.

**7.** Method according to claim 7, wherein the absorbing comprises absorption of a dc current while an ac current is bypassed by a filter.

**8.** Use of a device according to any of claims 1 - 5 and according to method claims 6 or 7 in a transformer connection for controlling a power flow in a electric power transmission system.

**Patentansprüche**

**1.** Vorrichtung zum Steuern eines Energieflusses in einem Elektroenergieübertragungssystem, die eine Steuerschaltung (1) und einen zweiten Umgehungsweg (6), der damit parallel geschaltet ist, wobei die Steuerschaltung (1) einen ersten Induktor (2) und ein Halbleiterschaltelement (3), die parallel geschaltet sind, aufweist, und einen ersten Umgehungsweg (4), der einen Überspannungsschutz (5) aufweist, umfasst, wobei der zweite Umgehungsweg (6) einen schließenden Schalter (7) umfasst, **dadurch gekennzeichnet, dass** die Vorrichtung einen Widerstand (8) zum Absorbieren der elektrischen Gleichstromenergie, die in der Steuerschaltung durch Wärmetransformation eingefangen wird, umfasst.

**2.** Vorrichtung nach Anspruch 1, wobei der Widerstand (8) in dem zweiten Umgehungsweg (6) enthalten ist.

**3.** Vorrichtung nach Anspruch 1, wobei der Widerstand (8) mit der Steuerschaltung (1) in Reihe geschaltet ist.

**4.** Vorrichtung nach Anspruch 2 oder 3, wobei die Vorrichtung einen Kondensator (10) und einen zweiten Induktor (11) umfasst, die parallel zu dem Widerstand (8) geschaltet sind, um ein Filter (9, 12), das eine niedrige Impedanz für die Grundfrequenz aufweist, zu bilden.

**5.** Vorrichtung nach einem der vorhergehenden Ansprüche, wobei die Steuerschaltung (1) mehrere Schaltungseinheiten (1a-1d) umfasst.

**6.** Verfahren zum Schützen einer Steuerschaltung (1) vor eingefangenem Strom, wobei die Steuerschaltung (1) einen ersten Induktor (2), ein Haltleiterschaltelement (3) und einen ersten Umgehungsweg (4), der einen Überspannungsschutz (5), der parallel geschaltet ist, sowie einen zweiten Umgehungsweg (6), der einen schließenden Schalter (7) aufweist, umfasst, **gekennzeichnet durch** das Bereitstellen eines Widerstands (8) zum Absorbieren elektrischer Gleichstromenergie, die in der Steuerschaltung (1) **durch** Wärmetransformation eingefangen ist.

**7.** Verfahren nach Anspruch 6, wobei das Absorbieren die Absorption eines Gleichstroms umfasst, während ein Wechselstrom durch ein Filter umgeleitet wird.

**8.** Anwendung einer Vorrichtung nach einem der Ansprüche 1-5 und gemäß dem Verfahren nach den Ansprüchen 6 oder 7 in einer Transformatorverbindung zum Steuern eines Energieflusses in einem Elektroenergieübertragungssystem.

**Revendications**

**1.** Dispositif pour réguler un flux d'énergie dans un système de transmission d'énergie électrique comprenant un circuit de régulation (1) et un deuxième chemin de dérivation (6) branché en parallèle avec lui, le circuit de régulation (1) comprenant une première inductance (2) et un élément de communication semi-conducteur (3) monté en parallèle et un premier chemin de dérivation (4) comprenant un parasurtenseur (5), et le deuxième chemin de dérivation (6) comprenant un commutateur de fermeture (7), le dispositif étant **caractérisé en ce qu'**il comprend une résistance (8) pour absorber l'énergie électrique de composante continue piégée dans le circuit de régulation par transformation thermique.

**2.** Dispositif selon la revendication 1, dans lequel la résistance (8) est comprise dans le deuxième chemin de dérivation (6).

**3.** Dispositif selon la revendication 1, dans lequel la résistance (8) est montée en série avec le circuit de régulation (1).

**4.** Dispositif selon la revendication 2 ou 3, le dispositif comprenant un condensateur (10) et une deuxième inductance (11) montés en parallèle avec la résistance (8) pour former un filtre (9, 12) possédant une faible impédance pour la fréquence fondamentale.

**5.** Dispositif selon l'une quelconque des revendications précédentes, dans lequel le circuit de régulation (1) comprend une pluralité d'unités de circuit (la - 1d).

**6.** Procédé de protection d'un circuit de régulation (1) vis-à-vis d'un courant piégé, le circuit de régulation (1) comprenant une première inductance (2), un élément de communication semi-conducteur (3) et un premier chemin de dérivation (4) comprenant un parasurtenseur (5) monté en parallèle, et un deuxième chemin de dérivation (6) comprenant un commutateur de fermeture (7), le procédé étant **caractérisé en ce qu'**il consiste à utiliser une résistance (8) pour absorber l'énergie électrique de composante continue piégée dans le circuit de régulation (1) par trans-

**EP 1 610 432 B1**

formation thermique.

7. Procédé selon la revendication 6, dans lequel l'absorption comprend l'absorption d'un courant continu alors qu'un courant alternatif est mis en dérivation par un filtre.

8. Utilisation d'un dispositif selon l'une quelconque des revendications 1 à 5 et selon un procédé selon les revendications 6 ou 7 dans un montage de transformateur pour réguler un flux d'énergie dans un système de transmission d'énergie électrique.

Fig 1

Fig 2

Fig 3

Fig 4

Fig 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6028471 A